# EUROPÄISCHE PATENTSCHRIFT

(11) **EP 1 933 501 B1**
(45) Veröffentlichungstag und Bekanntmachung des Hinweises auf die Patenterteilung: **27.06.2012**
(21) Anmeldenummer: 06026078.3
(22) Anmeldetag: 15.12.2006
(51) Int. Cl.: H04W 24/00, H04L 12/26

(54) **Verfahren zum Analysieren eines Ablaufs einer zwischen mindestens zwei Instanzen ablaufenden Kommunikation und Protokolltester**
Method for analysing the communication sequence which runs between at least two entities and a protocol tester
Procédé destiné à l'analyse d'un processes de communication se déroulant entre au moins deux instances et contrôleur de protocole

(43) Veröffentlichungstag der Anmeldung: 18.06.2008
(73) Patentinhaber: Tektronix International Sales GmbH, 8212 Neuhausen (CH)
(72) Erfinder: MC Donald, Martin, 13503 Berlin (DE); Polak, Martin, 13187 Berlin (DE)
(74) Vertreter: Schurack, Eduard F.

(56) Entgegenhaltungen:
- GB-A- 2 426 668
- AGILENT TECHNOLOGIES: "Agilent Signaling Analyser" INTERNET ARTICLE, [Online] 2005, Seiten 1-33, XP002433089 Internet Gefunden im Internet: URL:http://cp.literature.agilent.com/litwe b/pdf/5989-0347EN.pdf> [gefunden am 2007-05-09]
- H. SCHULZRINNE; A. NARAYANAN; J. LENNOX: "SIPstone - Benchmarking SIP Server Performance" INTERNET ARTICLE, [Online] 12. April 2002 (2002-04-12), Seiten 1-15, XP002433090 Internet Gefunden im Internet: URL:http://www.sipstone.org/files/sipstone _0402.pdf> [gefunden am 2007-05-09]

## Beschreibung

Die vorliegende Erfindung betrifft ein Verfahren zum Analysieren eines Ablaufs einer zwischen mindestens zwei Instanzen ablaufenden Kommunikation, wobei der Kommunikationsablauf eine Abfolge mehrerer Calls umfasst, die ihrerseits mindestens eine Nachricht umfassen, wobei der Kommunikationsablauf auf einer Anzeigeeinheit durch Symbole dargestellt wird und wobei eine erste Mehrzahl von Nachrichten eine erste Prozedur und eine zweite Mehrzahl von Nachrichten eine zweite Prozedur bildet. Sie betrifft überdies einen entsprechenden Protokolltester zum Analysieren eines Ablaufs einer zwischen mindestens zwei Instanzen ablaufenden Kommunikation.

Zum Überwachen von Kommunikationsabläufen, beispielsweise in Mobilfunknetzen, werden bekanntlich Protokolltester eingesetzt. Dabei fallen große Mengen an Daten an, die analysiert werden müssen. Um einem Benutzer die Analyse der aufgezeichneten Daten zu ermöglichen, ist es bekannt, auf einer Anzeigeeinheit, beispielsweise einem Computerbildschirm, einen Kommunikationsablauf betreffende Daten darzustellen. Dabei ist für jeden Call eines Kommunikationsablaufs eine Zeile auf der Anzeigeeinheit vorgesehen, in der Informationen zu diesem Call angezeigt werden. Ein Call umfasst einzelne Protokollmessages, im Folgenden als Nachrichten bezeichnet, und ist im Falle der Übertragung von Sprache als eine Abfolge von Nachrichten vom Verbindungsaufbau bis zum Verbindungsabbau definiert. Im Falle der Übertragung von Daten kann eine Folge von Nachrichten von der Kontextaktivierung bis zur Kontextdeaktivierung als Call dargestellt werden. Außerdem werden eine oder mehrere Kontextaktivierungen durch eine Attach-Prozedur vorbereitet. Diese wird entweder als eigener Call oder in Verbindung mit Kontextaktivierung und -deaktivierung als ein Call dargestellt. Entsprechendes gilt für eine Detach-Prozedur, die dem Beenden einer Datenverbindung dient. Daneben gibt es Nachrichten oder Prozeduren, die weder Sprach-Calls noch Daten-Calls direkt zugeordnet sind und als eigenständige Calls dargestellt werden, beispielsweise Paging-Nachrichten. Um eine Nachrichtenfolge innerhalb einer Zeile darstellen zu können, wird jede Nachricht durch ein Symbol repräsentiert.

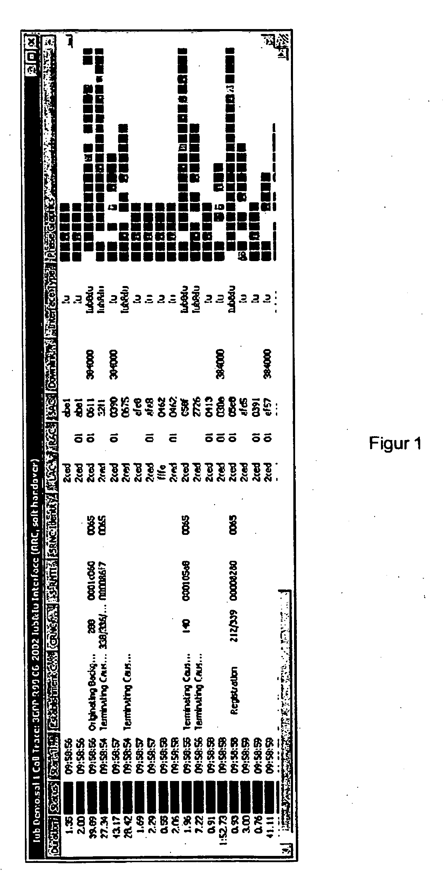

Figur 1 zeigt als Beispiel für diese Art der Darstellung einen Ausschnitt eines Fensters einer grafischen Benutzeroberfläche eines als Agilent Signaling Analyzer bekannten Protokolltesters. Dieses Bild ist der Broschüre "Agilent Signaling Analyzer - Technical Overview" von Agilent Technologies entnommen. In dem mit "Phase Graphics" überschriebenen Bereich des Fensters werden die einzelnen Nachrichten eines Calls durch Kästchen dargestellt, die im Original verschiedene Farben aufweisen, die in Figur 1 als Grauabstufungen zu erkennen sind. Einige Kästchen weisen zusätzlich noch einen Icon auf.

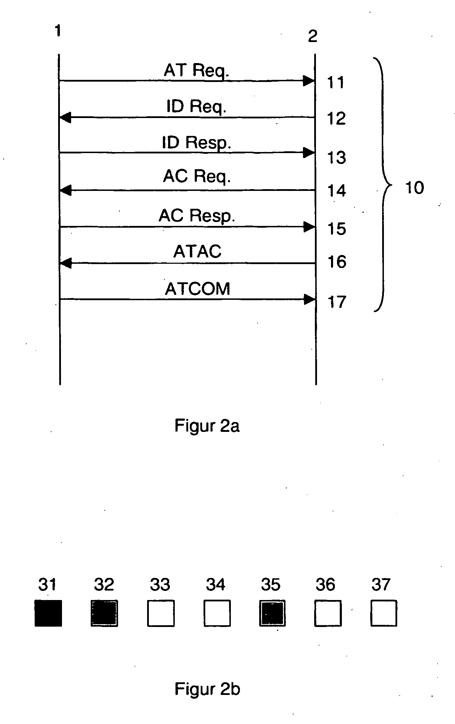

Im Folgenden soll der Zusammenhang zwischen den Nachrichten und den die Nachrichten repräsentierenden Symbolen an einem Beispiel erläutert werden. Figur 2a zeigt einen aus einem Call 10 bestehenden Kommunikationsablauf zwischen einer ersten Instanz 1 und einer zweiten Instanz 2. Dabei entspricht ein Pfeil einer Nachricht. Zuerst sendet die Instanz 1 eine Anfrage "Attach Request" 11 an die Instanz 2. Diese fordert mit einer Nachricht "Identification Request" 12 die Instanz 1 auf, sich zu identifizieren. Darauf antwortet die Instanz 1 mit einer Nachricht "Identification Response" 13. Daraufhin sendet die Instanz 2 eine Nachricht "Authentification and Ciphering Request" 14 an die Instanz 1. Als Antwort sendet die Instanz 1 eine "Authentification and Ciphering Response" 15, um ihre Echtheit zu beweisen. Daraufhin sendet die Instanz 2 eine Nachricht "Attach Accept" 16 als Antwort auf die Nachricht "Attach Request" 11. Die Instanz 1 bestätigt schließlich den Erhalt der Nachricht "Attach Accept" 16 mit einer Nachricht "Attach Complete" 17.

Aus Figur 2b ist zu ersehen, wie diese Nachrichtenfolge gemäß dem Stand der Technik durch Symbole dargestellt wird. Jede der Nachrichten 11 bis 17 wird durch ein Symbol 31 bis 37 in Form eines Kästchens dargestellt, wobei jeder Nachricht eine andere Farbe, die in Figur 2b als Grauabstufung erscheint, zugewiesen wird. Auf diese Weise lässt sich ein Call 10 in einer Zeile darstellen, so dass in einem Fenster eine Abfolge vieler Calls als so genannter Call-Flow untergebracht werden kann. Aufgrund der großen Datenmengen, ist es für einen Benutzer jedoch weiterhin schwierig, sich schnell einen Überblick über den überwachten Kommunikationsablauf zu verschaffen.

Der vorliegenden Erfindung liegt daher die Aufgabe zu Grunde, ein Verfahren der eingangs genannten Art bereitzustellen, das eine noch einfachere und schnellere Analyse eines Kommunikationsablaufs ermöglicht. Sie besteht weiterhin darin, einen entsprechenden Protokolltester bereitzustellen.

Die erstgenannte Aufgabe wird gelöst durch ein Verfahren mit den Merkmalen von Patentanspruch 1. Gemäß einem weiteren Aspekt der Erfindung wird die zweitgenannte Aufgabe gelöst durch einen Protokolltester mit den Merkmalen von Patentanspruch 10.

Der vorliegenden Erfindung liegt die Erkenntnis zu Grunde, dass die einem Benutzer dargebotene Information auf das Wesentliche reduziert und ihm so die Analyse eines Kommunikationsablaufs erleichtert werden kann, wenn die Darstellung eines Calls auf Prozedurniveau erfolgt. Dazu werden statt einzelner Nachrichten ganze Prozeduren durch jeweils ein Symbol repräsentiert. Gemäß einem dem Kommunikationsablauf zu Grunde liegenden Standard, beispielsweise dem TS 24.008 von 3 GPP, bilden eine oder mehrere zusammengehörende Nachrichten eine Prozedur. Wie auch aus Figur 2a zu ersehen ist, folgen eine Prozedur bildende Nachrichten innerhalb eines Calls nicht notwendigerweise direkt aufeinander, sondern es können mehrere Prozeduren ineinander verschachtelt sein. Das erschwert es einem Benutzer, sich einen Überblick über einen Kommunikationsablauf zu verschaffen. Durch das Zusammenfassen der einzelnen Nachrichten zu Prozeduren bei der Darstellung eines Calls wird die Übersichtlichkeit und Lesbarkeit eines Call-Flows erheblich verbessert, was die Analyse der Daten einfacher und schneller macht.

Jedem Symbol wird ein optisches Merkmal zugewiesen, das der durch das Symbol dargestellten Prozedur zugeordnet ist. Dadurch lassen sich die dargestellten Prozeduren einfach identifizieren. Es ist weiter bevorzugt, dass jedem Symbol ein optisches Merkmal zugewiesen wird, das dem Status der durch das Symbol dargestellten Prozedur zugeordnet ist. Dadurch ist auf den ersten Blick ersichtlich, ob eine Prozedur erfolgreich abgeschlossen wurde oder ob Fehler aufgetreten sind. Das Darstellen von Prozeduren durch Symbole, die Auskunft über den Zustand oder Status der jeweiligen Prozedur geben, vereinfacht die Analyse eines Kommunikationsablaufs erheblich, da dem Benutzer abgenommen wird, für jede einzelne Prozedur zu überprüfen, ob alle zugehörigen Nachrichten ordnungsgemäß empfangen wurden. Dass der Status einer Prozedur an dem Symbol, das die Prozedur repräsentiert, erkennbar ist, ermöglicht es dem Benutzer, sich auf fehlgeschlagene Calls zu konzentrieren, die üblicherweise bei der Überwachung von Kommunikationsabläufen am meisten von Interesse sind. Bei dem optischen Merkmal kann es sich um eine Farbe, eine Grauabstufung, einen Icon oder eine Mnemonik, d. h. ein Buchstabenkürzel, handeln.

Gemäß einer bevorzugen Ausführungsform der Erfindung werden dem Symbol einer jeden Prozedur eine Mnemonik zur Angabe der Prozedur und eine Hintergrundfarbe oder eine Grauabstufung zur Angabe des Status der Prozedur zugewiesen. Alternativ kann dem Symbol statt der Mnemonik ein Icon zur Angabe der Prozedur zugewiesen werden.

Gemäß einer alternativen bevorzugten Ausführungsform werden dem Symbol einer jeden Prozedur ein Feld mit einer Farbe oder einer Grauabstufung zur Angabe der Prozedur und ein in dem Feld angeordneter Icon oder eine Mnemonik zur Angabe des Status der Prozedur zugewiesen. Bei dem Feld handelt es sich vorzugsweise um ein Quadrat oder ein Rechteck, es kann aber auch eine andere Form haben.

Zur Darstellung einer Abfolge mehrerer Calls ist es weiterhin vorteilhaft, wenn die zu einem Call gehörenden Prozeduren in einer Zeile dargestellt werden. Dabei ist es besonders vorteilhaft, wenn zu jedem Call, in der die zu dem Call gehörenden Prozeduren enthaltenden Zeile, zusätzliche den Call betreffende Informationen angezeigt werden.

Vorzugsweise öffnet sich auf eine das Symbol einer Prozedur auf der Anzeigeeinheit betreffende Benutzerbetätigung hin automatisch ein zusätzliches Fenster, in dem die einzelnen Nachrichten des Calls aufgeführt sind, zu dem die Prozedur gehört. Bei der Benutzerbetätigung kann es sich um ein Bewegen eines Cursors über das Symbol der Prozedur auf der Anzeigeeinheit handeln. Alternativ dazu kann es sich auch um das Bewegen eines Mauszeigers zu dem Symbol in Verbindung mit einem einfachen Anklicken oder einem Doppelklick handeln. Dieses Funktionsmerkmal ermöglicht dem Benutzer eine genauere Analyse einer fehlgeschlagenen Prozedur.

Um die dem Benutzer dargebotene Datenmenge weiter zu reduzieren, ist es bevorzugt, die die Prozeduren darstellenden Symbole zur Definition mindestens einer Filtervorschrift zu verwenden. Da die Symbole sowohl Auskunft über die Art als auch über den Status einer Prozedur geben, kann ein Filter auf einen Status einer Prozedur gesetzt werden. Dadurch wird das Definieren von Filtervorschriften gegenüber dem Stand der Technik erheblich vereinfacht.

Die im Zusammenhang mit dem erfindungsgemäßen Verfahren beschriebenen bevorzugten Ausführungsformen und Vorteile gelten, soweit anwendbar, auch für den erfindungsgemäßen Protokolltester.

Im Nachfolgenden wird nunmehr ein Ausführungsbeispiel der Erfindung unter Bezugnahme auf die beigefügten Zeichnungen näher beschrieben. Es zeigen:
- Figur 1: einen Ausschnitt einer grafischen Benutzeroberfläche eines aus dem Stand der Technik bekannten Verfahrens zum Analysieren eines Kommunikationsablaufs;
- Figur 2a: eine Abfolge von zwischen zwei Instanzen ausgetauschten Nachrichten, die einen Call bilden;
- Figur 2b: eine aus dem Stand der Technik bekannte Darstellung des Calls aus Figur 2a durch Symbole;
- Figur 3a: dieselbe einen Call bildende Abfolge von Nachrichten wie in Figur 2a;
- Figur 3b: eine erfindungsgemäße Darstellung des Calls aus Figur 3a durch Symbole;
- Figur 4a: eine der Abfolge aus Figur 3a entsprechende Abfolge von Nachrichten, die einen fehlgeschlagenen Call darstellen; und
- Figur 4b: eine erfindungsgemäße Darstellung des Calls aus Figur 4a durch Symbole.

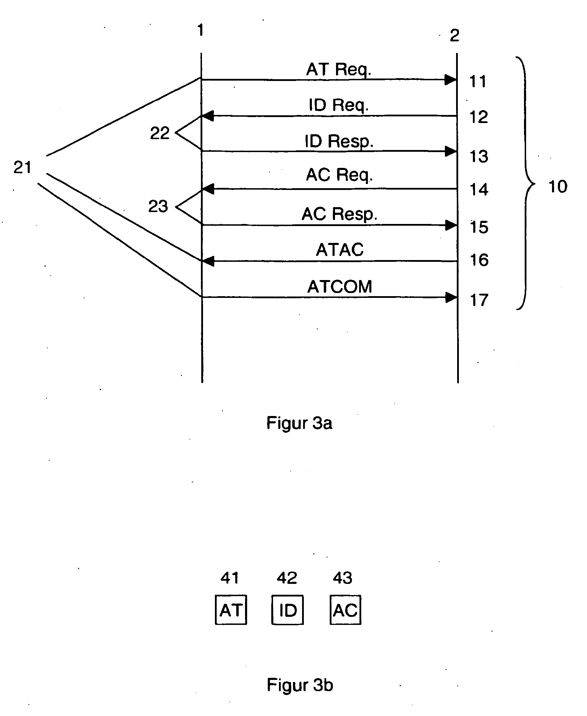

Figur 3a zeigt noch einmal den in Figur 2a dargestellten Call 10 mit der Nachrichtenfolge 11 bis 17. Einander entsprechende Elemente des Standes der Technik und der Erfindung sind in den Zeichnungen mit denselben Bezugszeichen versehen. Aus Figur 3b ist zu ersehen, wie die Nachrichten 11 bis 17 des in Figur 3a gezeigten Calls 10 gemäß einem bevorzugten Ausführungsbeispiel der Erfindung dargestellt werden. Wie beim Stand der Technik ist für jeden Call eine Zeile auf der Anzeigeeinheit vorgesehen. In dieser Zeile können noch weitere den Call betreffende Informationen, wie beispielsweise eine Call-Identifikationsnummer, angezeigt werden. Jedoch wird nicht jede Nachricht durch ein eigenes Symbol repräsentiert, sondern Nachrichten, die zu einer Prozedur gehören, werden zusammengefasst und durch ein einziges Symbol dargestellt. So bilden die in Figur 3a gezeigten Nachrichten "Attach Request" 11, "Attach Accept" 16 und "Attach Complete" 17 eine Prozedur 21, die durch das Symbol 41 dargestellt wird. Die Nachrichten "Identity Request" 12 und "Identity Response" 13 bilden eine Prozedur 22, der das Symbol 42 auf der Anzeigeeinheit entspricht. Die Nachrichten "Authentification and Ciphering Request" 14 und "Authentification and Ciphering Response" 15 bilden schließlich eine Prozedur 23, die durch das Symbol 43 repräsentiert wird. Dabei werden die Symbole für die Prozeduren in der Reihenfolge dargestellt, in der die jeweils ersten Nachrichten der Prozeduren auftreten.

Gemäß dem in Figur 3b gezeigten bevorzugten Ausführungsbeispiel der Erfindung werden die Prozeduren durch Buchstabenkürzel identifiziert. Es ist aber auch möglich, den Symbolen, die die einzelnen Prozeduren darstellen, als optisches Merkmal zum Bezeichnen der Prozedur einen Icon, eine Farbe oder eine Grauabstufung zuzuweisen. Zusätzlich ist aus Figur 3b der Zustand oder Status der jeweiligen Prozedur zu erkennen. Der in Figur 3b verwendete Grauton der Symbole 41, 42 und 43 gibt den erfolgreichen Abschluss der Prozeduren 21, 22 und 23 an. Gemäß dem in Figur 3b gezeigten Ausführungsbeispiel befindet sich das Buchstabenkürzel oder die Mnemonik in einem Feld, beispielsweise einem Kästchen oder einem Kreis, mit der entsprechenden Grauabstufung. Alternativ dazu kann aber auch die Mnemonik selbst in der entsprechenden Grauabstufung dargestellt werden.

Noch deutlicher lässt sich der Status der Prozeduren mit einer farbigen Anzeige darstellen. Beispielsweise können erfolgreich abgeschlossene Prozeduren durch ein grünes Symbol, zurückgewiesene Prozeduren dagegen durch ein rotes Symbol dargestellt werden. Begonnene aber noch nicht abgeschlossene Prozeduren oder Prozeduren mit Time-out, d. h. Prozeduren, die nicht erfolgreich abgeschlossen werden konnten, da in der vorgegebenen Zeit nicht alle Nachrichten angekommen sind, können durch ein gelbes Symbol kenntlich gemacht werden. Prozeduren, bei denen ein anderer Fehler aufgetreten ist, können durch eine weitere auffällige Farbe, wie Magenta, markiert werden. Dadurch wird die Lesbarkeit von Call-Flows wesentlich erleichtert, da die dargestellte Information einerseits auf das Wesentliche reduziert wird und andererseits aufgetretene Fehler hervorgehoben werden.

Bei einem alternativen Ausführungsbeispiel, bei dem zur Kenntlichmachung der Prozedur Farben oder Grauabstufungen verwendet werden, kann der Status der Prozedur durch Icons oder Mnemoniks angezeigt werden.

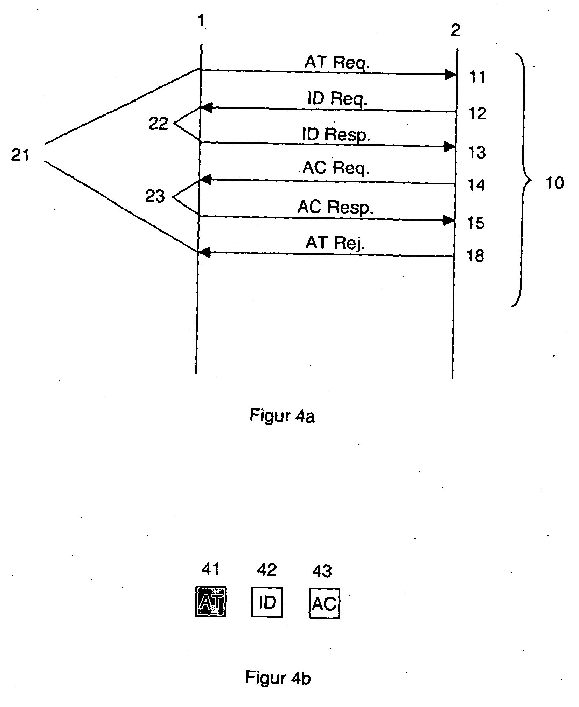

Figur 4a zeigt einen Call 10, bei dem die Instanz 2 als letzte Nachricht ein "Attach Reject" 18 statt eines "Attach Accept" 16 an die Instanz 1 sendet und die Prozedur "Attach" 21 damit zurückweist. Aus Figur 4b ist die Darstellung des Calls 10 für diesen Fall zu ersehen. Dass die Prozedur "Attach" 21 nicht erfolgreich abgeschlossen wurde, wird durch ein Symbol 41 mit weißem Hintergrund angezeigt. So kann der Benutzer sofort erkennen, bei welcher Prozedur ein Fehler aufgetreten ist. Für eine genauere Analyse des aufgetretenen Fehlers weist das bevorzugte Ausführungsbeispiel ein weiteres Funktionsmerkmal auf. Bewegt der Benutzer auf der Anzeigeeinheit einen Mauszeiger zu einem eine Prozedur repräsentierenden Symbol, öffnet sich mittels eines Doppelklicks auf das Symbol ein weiteres Fenster, in dem die einzelnen Nachrichten des Calls, zu dem die Prozedur gehört, dargestellt sind. Diese Darstellung kann in einer Form erfolgen, wie sie in Figur 4a gezeigt ist.

Gemäß einem bevorzugten Ausführungsbeispiel der Erfindung ist es weiterhin möglich, die auf der Anzeigeeinheit dargestellte Datenmenge durch den Einsatz von Filtern weiter zu reduzieren. Da bei der Darstellung nach dem Status der Prozeduren unterschieden wird, lassen sich Filter auf die Zustände der Prozeduren setzen, so dass beispielsweise nur noch Prozeduren angezeigt werden, die zurückgewiesen wurden. Dies ermöglicht ein einfaches Konfigurieren von Filtern.

Ein bevorzugtes Ausführungsbeispiel eines erfindungsgemäßen Protokolltesters weist eine Anzeigeeinheit auf, auf der jeweils ein Call aus einer einen zu analysierenden Kommunikationsablauf bildenden Abfolge von Calls in einer Zeile mittels Symbolen gemäß dem erfindungsgemäßen Verfahren darstellbar ist.

## Patentansprüche

1. Verfahren zum Analysieren eines Ablaufs einer zwischen mindestens zwei Instanzen (1, 2) eines Mobilfunknetzes ablaufenden Kommunikation mittels eines Protokolltesters, wobei
- der Kommunikationsablauf eine Abfolge mehrerer Calls (10) umfasst und davon zumindest ein Call mehrere Nachrichten (11, ..., 17; 11, ..., 18) umfasst, von denen eine erste Mehrzahl von zusammengehörenden Nachrichten (11, 16, 17; 11, 16, 18) gemäß dem dem Kommunikationsablauf zugrunde liegenden Standard TS 24.008 von 3GPP eine erste Prozedur (21) bildet, die nur erfolgreich abgeschlossen ist, wenn alle zugehörigen Nachrichten ordnungsgemäß empfangen wurden, und eine zweite Mehrzahl von zusammengehörenden Nachrichten (12, 13) eine zweite solche Prozedur (22) bildet; und wobei
- der Kommunikationsablauf auf einer Anzeigeeinheit durch Symbole (41, 42, 43) dargestellt wird;
**dadurch gekennzeichnet, dass**
- die erste Mehrzahl von Nachrichten (11, 16, 17; 11, 16, 18) zu der ersten Prozedur (21) und die zweite Mehrzahl von Nachrichten (12, 13) zu der zweiten Prozedur (22) zusammengefasst wird und
- die erste Prozedur (21) durch ein erstes Symbol (41) und die zweite Prozedur (22) durch ein zweites Symbol (42) dargestellt wird, so dass jeweils eine Prozedur durch ein einziges Symbol dargestellt wird,
- für jede einzelne Prozedur überprüft wird, ob alle zugehörigen Nachrichten ordnungsgemäß empfangen wurden und
- jedem Symbol (41, 42, 43) ein optisches Merkmal zugewiesen wird, das dem Status der durch das Symbol dargestellten Prozedur zugeordnet ist.

2. Verfahren nach Anspruch 1,
**dadurch gekennzeichnet,**
**dass** jedem Symbol (41, 42, 43) ein optisches Merkmal zugewiesen wird, das der durch das Symbol dargestellten Prozedur zugeordnet ist.

3. Verfahren nach Anspruch 1 oder 2,
**dadurch gekennzeichnet,**
**dass** es sich bei dem optischen Merkmal um eine Farbe, eine Grauabstufung, einen Icon oder eine Mnemonik handelt.

4. Verfahren nach Anspruch 3,
**dadurch gekennzeichnet,**
**dass** dem Symbol (41, 42, 43) einer jeden Prozedur (21, 22, 23) ein Icon oder eine Mnemonik zur Angabe der Prozedur und eine Hintergrundfarbe oder eine Grauabstufung zur Angabe des Status der Prozedur zugewiesen werden.

5. Verfahren nach Anspruch 3,
**dadurch gekennzeichnet,**
**dass** dem Symbol (41, 42, 43) einer jeden Prozedur (21, 22, 23) ein Feld mit einer Farbe oder einer Grauabstufung zur Angabe der Prozedur und ein in dem Feld angeordneter Icon oder eine Mnemonik zur Angabe des Status der Prozedur zugewiesen werden.

6. Verfahren nach einem der vorangehenden Ansprüche,
**dadurch gekennzeichnet,**
**dass** die zu einem Call (10) gehörenden Prozeduren (21, 22, 23) in einer Zeile dargestellt werden.

7. Verfahren nach Anspruch 6,
**dadurch gekennzeichnet,**
**dass** zu jedem Call (10) in der die zu dem Call (10) gehörenden Prozeduren (21, 22, 23) enthaltenden Zeile zusätzliche den Call (10) betreffende Informationen angezeigt werden.

8. Verfahren nach einem der vorhergehenden Ansprüche,
**dadurch gekennzeichnet,**
**dass** sich auf eine das Symbol (41, 42, 43) einer Prozedur (21, 22, 23) auf der Anzeigeeinheit betreffende Benutzerbetätigung hin ein zusätzliches Fenster automatisch öffnet, in dem die einzelnen Nachrichten (11, ..., 17; 11, ..., 18) des Calls (10) aufgeführt sind, zu dem die Prozedur (21, 22, 23) gehört.

9. Verfahren nach einem der vorhergehenden Ansprüche,
**dadurch gekennzeichnet,**
**dass** die die Prozeduren (21, 22, 23) darstellenden Symbole (41, 42, 43) zur Definition mindestens einer Filtervorschrift verwendet werden.

10. Protokolltester mit
einer Anzeigeeinheit zum Darstellen eines Ablaufs einer zwischen mindestens zwei Instanzen eines Mobilfunknetzes ablaufenden Kommunikation, wobei
- der Kommunikationsablauf eine Abfolge mehrerer Calls (10) umfasst und davon zumindest ein Call mehrere Nachrichten (11, ..., 17; 11, ..., 18) umfasst, von denen eine erste Mehrzahl von zusammengehörenden Nachrichten (11, 16, 17; 11, 16, 18) gemäß dem Standard TS 24.008 von 3GPP eine erste Prozedur (21) bildet, die nur erfolgreich abgeschlossen ist, wenn alle zugehörigen Nachrichten ordnungsgemäß empfangen wurden, und eine zweite Mehrzahl von zusammengehörenden Nachrichten (12, 13) eine zweite solche Prozedur (22) bildet; und wobei
- der Kommunikationsablauf auf der Anzeigeeinheit durch Symbole (41, 42, 43) darstellbar ist;
**dadurch gekennzeichnet, dass**
der Protokolltester dazu ausgebildet ist,
- die erste Mehrzahl von Nachrichten (11, 16, 17; 11, 16, 18) zu der ersten Prozedur (21) und die zweite Mehrzahl von Nachrichten (12, 13) zu der zweiten Prozedur (22) zusammenzufassen und
- die erste Prozedur (21) durch ein erstes Symbol (41) und die zweite Prozedur (22) durch ein zweites Symbol (42) darzustellen, so dass jeweils eine Prozedur durch ein einziges Symbol darstellbar ist,
- für jede einzelne Prozedur zu überprüfen, ob alle zugehörigen Nachrichten ordnungsgemäß empfangen wurden, und
- jedem Symbol (41, 42, 43) ein optisches Merkmal zuzuweisen, das dem Status der durch das Symbol dargestellten Prozedur zugeordnet ist.

## Claims

1. A method for analysing a process of a communication taking place between at least two instances (1, 2) of a mobile radio network by means of a protocol tester, wherein
- the communication process comprises a sequence of several calls (10) and at least one call thereof comprises several messages (11, ..., 17; 11, ..., 18), of which a first plurality of associated messages (11, 16, 17; 11, 16, 18) according to the standard TS 24.008 of 3GPP underlying the communication process forms a first procedure (21), which is only successfully completed, if all associated messages were correctly received, and a second plurality of associated messages (12, 13) forms a second such procedure (22); and wherein
- the communication process is represented on a display unit by symbols (41, 42, 43);
**characterized in that**
- the first plurality of messages (11, 16, 17; 11, 16, 18) is combined to form the first procedure (21) and the second plurality of messages (12, 13) is combined to form the second procedure (22) and
- the first procedure (21) is represented by a first symbol (41) and the second procedure (22) is represented by a second symbol (42), so that one procedure each is represented by a single symbol,
- for every single procedure it is checked whether all associated messages were correctly received and
- to each symbol (41, 42, 43) is assigned an optical feature associated with the status of the procedure represented by the symbol.

2. The method according to claim 1,
**characterised in that**
to each symbol (41, 42, 43) is assigned an optical feature that is associated with the procedure represented by the symbol.

3. The method according to claim 1 or 2,
**characterised in that**
the optical feature is a colour, a shade of grey, an icon, or a mnemonic.

4. The method according to claim 3,
**characterised in that**
to the symbol (41, 42, 43) of each procedure (21, 22, 23) is assigned an icon or a mnemonic to indicate the procedure and a background colour or a shade of grey to indicate the status of the procedure.

5. The method according to claim 3,
**characterised in that**
to the symbol (41, 42, 43) of each procedure (21, 22, 23) is assigned a field having a colour or a shade of grey to indicate the procedure and an icon, arranged in the field, or a mnemonic to indicate the status of the procedure.

6. The method according to any one of the preceding claims, **characterised in that**
the procedures (21, 22, 23) belonging to a call (10) are represented in a line.

7. The method according to claim 6,
**characterised in that**
for each call (10) in the line containing the procedures (21, 22, 23) belonging to the call (10) additional information relating to the call (10) is indicated.

8. The method according to any one of the preceding claims,
**characterised in that**
upon a user confirmation relating to the symbol (41, 42, 43) of a procedure (21, 22, 23) on the display unit an additional window opens automatically, in which the individual messages (11, ..., 17; 11, ..., 18) of the call (10) to which the procedure (21, 22, 23) belongs are given.

9. The method according to any one of the preceding claims,
**characterised in that**
the symbols (41, 42, 43) representing the procedures (21, 22, 23) are used for defining at least one filter rule.

10. A protocol tester comprising
a display unit for representing a process of a communication taking place between at least two instances of a mobile radio network, wherein
- the communication process comprises a sequence of several calls (10) and at least one call thereof comprises several messages (11, ..., 17; 11, ..., 18), of which a first plurality of associated messages (11, 16, 17; 11, 16, 18) according to the standard TS 24.008 of 3GPP forms a first procedure (21), which is only successfully completed, if all associated messages were correctly received, and a second plurality of messages (12, 13) forms a second such procedure (22); and wherein
- the communication process is representable on a display unit by symbols (41, 42, 43);
**characterized in that**
the protocol tester is configured
- to combine the first plurality of messages (11, 16, 17; 11, 16, 18) to form the first procedure (21) and the second plurality of messages (12, 13) to form the second procedure (22) and
- to represent the first procedure (21) by a first symbol (41) and the second procedure (22) by a second symbol (42), so that one procedure each is capable of being represented by a single symbol,
- to check for every single procedure whether all associated messages were correctly received, and
- to assign to each symbol (41, 42, 43) an optical feature associated with the status of the procedure represented by the symbol.

## Revendications

1. Procédé d'analyse d'un processus de communication, se déroulant entre au moins deux instances (1, 2) d'un réseau de téléphonie mobile, au moyen d'un testeur de protocole, moyennant quoi
- le processus de communication comprend une séquence de plusieurs appels (10), parmi lesquels au moins un appel comprend plusieurs messages (11, ..., 17 ; 11, ..., 18), parmi lesquels une première pluralité de messages assortis (11, 16, 17 ; 11, 16, 18) constitue une première procédure (21), conformément à la norme TS 24.008 de 3GPP, qui sert de base au processus de communication, procédure qui n'est conclue avec succès que lorsque tous les messages correspondants ont été correctement reçus et une deuxième pluralité de messages assortis (12, 13) constitue une deuxième procédure (22) de ce type et moyennant quoi
- le processus de communication est représenté sur une unité d'affichage par le biais de symboles (41, 42, 43),
**caractérisé en ce**
- **que** la première pluralité de messages (11, 16, 17 ; 11, 16, 18) est groupée par rapport à la première procédure (21) et la deuxième pluralité de messages (12, 13)par rapport à la deuxième procédure (22) et
- **que** la première procédure (21) est représentée par le biais d'un premier symbole (41) et la deuxième procédure (22) par le biais d'un deuxième symbole (42), de sorte que, respectivement, une procédure est représentée par le biais d'un symbole unique,
- **qu'**il est vérifié, pour chaque procédure spécifique, si tous les messages assortis ont été correctement reçus et
- **qu'**il est affecté à chaque symbole (41, 42, 43) une caractéristique optique, qui est attribuée à l'état de la procédure, représentée par le biais du symbole.

2. Procédé suivant la revendication 1,
**caractérisé en ce**
**qu'**il est affecté à chaque symbole (41, 42, 43) une caractéristique optique, qui est attribuée à la procédure, représentée par le biais du symbole.

3. Procédé suivant la revendication 1 ou 2,
**caractérisé en ce**
**qu'**il s'agit, pour la caractéristique optique, d'une couleur, d'une nuance de gris, d'une icône ou d'un code mnémonique.

4. Procédé suivant la revendication 3,
**caractérisé en ce**
**qu'**il est affecté au symbole (41, 42, 43) de chaque procédure (21, 22, 23) une icône ou un code mnémonique, destiné à indiquer la procédure et une couleur d'arrière-plan ou une nuance de gris, pour indiquer l'état de la procédure.

5. Procédé suivant la revendication 3,
**caractérisé en ce**
**qu'**il est affecté au symbole (41, 42, 43) de chaque procédure (21, 22, 23) un champ avec une couleur ou une nuance de gris, destiné à indiquer la procédure et une icône ou un code mnémonique, disposé dans le champ, pour indiquer l'état de la procédure.

6. Procédé suivant l'une des revendications précédentes,
**caractérisé en ce**
**que** les procédures (21, 22, 23), appartenant à un appel (10), sont représentées dans une ligne.

7. Procédé suivant la revendication 6,
**caractérisé en ce**
**que**, pour chaque appel (10), dans la ligne, qui contient les procédures (21, 22, 23), appartenant à l'appel (10), des informations supplémentaires, qui concernent l'appel (10), sont affichées.

8. Procédé suivant l'une des revendications précédentes,
**caractérisé en ce**
**qu'**une fenêtre supplémentaire s'ouvre automatiquement, sur actionnement par un utilisateur, qui concerne le symbole (41, 42, 43) d'une procédure (21, 22, 23) sur l'unité d'affichage, fenêtre dans laquelle sont mentionnés les divers messages (11, ..., 17 ; 11, ..., 18) de l'appel (10), auquel appartient la procédure (21, 22, 23).

9. Procédé suivant l'une des revendications précédentes,
**caractérisé en ce**
**que** les symboles (41, 42, 43), qui représentent les procédures (21, 22, 23), sont utilisés pour définir au moins une consigne de filtrage.

10. Testeur de protocole avec
une unité d'affichage, destinée à représenter un processus de communication, se déroulant entre au moins deux instances d'un réseau de téléphonie mobile, moyennant quoi
- le processus de communication comprend une séquence de plusieurs appels (10), parmi lesquels un appel comprend plusieurs messages (11, ..., 17; 11, ..., 18), parmi lesquels une première pluralité de messages assortis (11, 16, 17 ; 11, 16, 18) constitue une première procédure (21), conformément à la norme TS 24.008 de 3GPP, procédure qui n'est conclue avec succès que lorsque tous les messages correspondants ont été correctement reçus et une deuxième pluralité de messages assortis (12, 13) constitue une deuxième procédure (22) de ce type et moyennant quoi
- le processus de communication peut être représenté sur l'unité d'affichage par le biais de symboles (41, 42, 43),
**caractérisé en ce que**
le testeur de protocole est formé
- pour grouper la première pluralité de messages (11, 16, 17 ; 11, 16, 18) par rapport à la première procédure (21) et la deuxième pluralité de messages (12, 13)par rapport à la deuxième procédure (22) et
- pour représenter la première procédure (21) par le biais d'un premier symbole (41) et la deuxième procédure (22) par le biais d'un deuxième symbole (42), de sorte que, respectivement, une procédure peut être représentée par le biais d'un symbole unique,
- pour vérifier, pour chaque procédure spécifique, si tous les messages assortis ont été correctement reçus et
- pour affecter à chaque symbole (41, 42, 43) une caractéristique optique, qui est attribuée à l'état de la procédure, représentée par le biais du symbole.
